(19) Europäisches Patentamt
European Patent Office
Office européen des brevets

(11) **EP 1 111 837 B1**

(12) **EUROPEAN PATENT SPECIFICATION**

(45) Date of publication and mention
of the grant of the patent:
**14.05.2008 Bulletin 2008/20**

(51) Int Cl.:
*H04L 7/033* (2006.01)   *H04L 27/22* (2006.01)

(21) Application number: **00311129.1**

(22) Date of filing: **13.12.2000**

(54) **Timing recovery method and device for telecommunications systems**

Verfahren und Vorrichtung zur Taktrückgewinnung für Telekommunikationssyteme

Procédé et dispositif de récupération d'horloge pour systèmes de télécommunication

(84) Designated Contracting States:
**DE FR GB**

(30) Priority: **21.12.1999 US 171346 P**

(43) Date of publication of application:
**27.06.2001 Bulletin 2001/26**

(73) Proprietor: **Texas Instruments Incorporated
Dallas, Texas 75251 (US)**

(72) Inventor: **Garcia, Dominigo G.
Plano,
Texas 75075 (US)**

(74) Representative: **Nettleton, John Victor et al
Abel & Imray
20 Red Lion Street
London WC1R 4PQ (GB)**

(56) References cited:
**US-A- 4 334 313**

• **GITLIN R D ET AL: "CENTER-TAP TRACKING ALGORITHMS FOR TIMING RECOVERY" AT & T TECHNICAL JOURNAL, AMERICAN TELEPHONE AND TELEGRAPH CO. NEW YORK, US, vol. 66, no. 6, 1 November 1987 (1987-11-01), pages 63-78, XP000674116 ISSN: 8756-2324**

**Description**

This invention relates generally to the field of telecommunications and is more specifically related to CAP/QAM modems and improvements therein.

In recent years, the data rates at which communications may be carried out over conventional telephone networks and wiring has greatly increased. These increases are due, in large part, to newly adopted techniques of multiplexing and modulating signals representative of the messages or data being communicated, resulting in greatly improved communication bandwidth. In addition, the carrier frequencies at which such communications are being carried out have also increased in recent years, further improving the bit rate.

In general, the local oscillator frequencies used in a transmitting modem and a receiving modem are not identical. The frequencies of their clocks can be off by as much as 100 ppm. One of the tasks of the receiving modem is to generate a signal that allows it to sample the output of the receiver portion of the modem at the best timing instant. The best timing instant gives the best estimate of the instant to sample the transmitted data. In doing so, the receiver must first acquire and then track the frequency drift of the transmitter's clock. This invention provides a method for solving this problem, and is especially useful in burst CAP/QAM modems.

Use of quadrature modulation is intended to increase the information-carrying capacity of a modulated signal. One such modulation is Quadrature Amplitude Modulation (QAM), described by Betts et al. in U.S. Patent No. 5,859,877. QAM involves transmitting data as a sequence of two-dimensional complex signals, i.e. with both in-phase and quadrature components. Each symbol, is assigned a specific pre-defined value according to the data it represents. A set of all of the values available for transmission is termed a constellation, and so resembles a constellation when graphically plotted on a two-dimensional basis.

Another modulation scheme is Carrierless Amplitude Phase modulation (CAP). Receivers using CAP modulation are a bandwidth-efficient means for receiving modulated signals using two-dimensional pass band line code in which the symbol data is organized in I and Q pairs. Knutson et al, U.S. Patent No. 5,930,309, describes a receiver signal processing system for CAP signals. The I and Q data in such a system are filtered with orthogonal I and Q band pass filters having a common pass band. With CAP, processing is done in the pass band of the filters, which eliminates the need for a carrier tracking loop. However, tighter signal timing constraints is required owing to the frequencies of the pulses transmitted. CAP signals can resemble QAM signals except the transmitted data is not spinning or rotating at a carrier frequency.

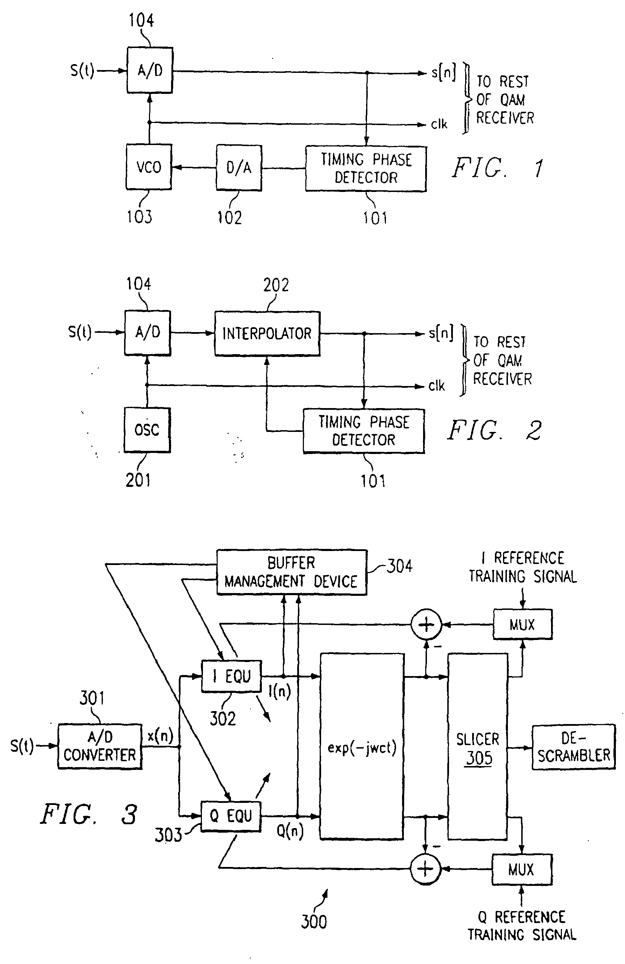

There are several conventional ways to perform timing recovery in a CAP/QAM system. One method is to implement a phase lock loop (PLL) using a combination of analog and digital techniques as shown in Figure 1. A Timing Phase Detector (TPD) 101 processes the incoming data samples, $s[n]$, sampled from a signal $S(t)$ by using an analog to digital converter (A/D) 104.

One known method, which can perform the function of the TPD 101, is a Band Edge Component Maximization (BECM) process which generates an error signal that is proportional to the difference in phase between the transmitter and receiver clocks. The error signal generated by the TPD 101 is filtered (or averaged) and passed on to a digital to analog (D/A) converter 102. The D/A converter output is used to control the frequency of a voltage controlled oscillator (VCO) 103. The advantage of this approach is that the rest of the receiver does not need to comprehend the timing mismatches. It assumes that the incoming data stream has been sampled at the optimum instant. However, a disadvantage of this approach is the mixing of both analog and digital circuitry.

Another known method for performing timing recovery is an all digital implementation of a PLL as illustrated in Figure 2. The receiver A/D converter is clocked by a free running oscillator 201. As in the first method, a Timing Phase Detector 101 is used to determine the phase error between the transmitter and receiver clocks according to the frequency of the free running oscillator 201. The error signal from the TPD 101 is then passed to an interpolator 202. The interpolator 202 generates optimally sampled data samples $s*[n]$ based on the signal $S(t)$ sampled by the fee running oscillator at a frequency regulated by the receiver clock. The interpolator 202 adds a fractional delay (less than 1 sample period delay) between the A/D converter and the rest of the receiver processing based on the error signal. The amount of delay is increased or decreased to correct for the transmitter clock drift measured by the TPD. A disadvantage of this method arises when a sample is to be inserted or deleted and the amount of delay required by the interpolator is more than one sample period to be inserted and less than one sample period to be deleted, respectively. As a consequence, when a sample must be inserted, for example the receiver has one sample period less time to process the signal and information may be lost.

US-A-4 334 313 discloses a timing recovery technique. In a first data receiver, sampling circuitry forms samples of a received data signal representing a succession of data symbols. The samples are formed at twice the symbol rate. Transversal filter circuitry operates on the samples by multiplying them by respective ones of a queue of coefficients. Further circuitry operative in response to the resulting products, forms decisions as to the values of the transmitted symbols and updates the values of the coefficients. Timing recovery circuitry periodically identifies the largest of the coefficients in magnitude and either advances or retards the operation of the sampling circuitry by a fixed step size depending on whether that coefficient is or is not within a predetermined portion of the queue. Timing recovery circuitry within a second data receiver operates in a similar manner, but employs a step size whose magnitude is determined by the position of the largest coefficient relative to the center of the coefficient queue.

Accordingly, a need has arisen in the art for a method and apparatus to provide timing recovery for CAP/QAM modems whereby the highest valued coefficients or tap weights of the system equalizers remain substantially centered in a tracking buffer, thereby preventing these coefficients from drifting to one side of the filter.

The present invention provides a method for timing recovery in a communications system including receiving an analog input signal, converting the analog input signal into a digital signal, splitting the digital signal into an in-phase input signal and a quadrature input signal, filtering the in-phase signal through an in-phase equalizer with the plurality of in-phase coefficients, filtering the quadrature signal through a quadrature equalizer with the plurality of quadrature coefficients, decoding transmitted symbols based upon the filtered in phase signal and the filtered quadrature signal, updating the plurality of in-phase coefficients in the in phase tracking buffer and the plurality of quadrature coefficients in the quadrature tracking buffer by contiguously minimizing a mean square error in the detected transmitted symbols, characterized in that:

said step of filtering the in phase signal through an in-phase equalizer includes filtering a selected plurality of in-phase coefficients corresponding to the contents of a contiguous sequence of coefficient locations within an in-phase tracking buffer that has a larger number of coefficient locations than the number of coefficients in the selected plurality of in-phase coefficients;

said step of filtering the quadrature signal through a quadrature equalizer includes filtering a selected plurality of quadrature coefficients corresponding to the contents of a contiguous sequence of coefficient locations within a quadrature tracking buffer that has a larger number of coefficient locations than the number of coefficients in the selected plurality of quadrature coefficients;

calculating a left sum of absolute values of updated coefficients in a one of the in phase tracking buffer or the quadrature tracking buffer for a contiguous sequence of a predetermined number of coefficient locations of an input end of the corresponding tracking buffer;

calculating a center sum of absolute values of updated coefficients in the one of the in phase tracking buffer or the quadrature tracking buffer for a contiguous sequence of the predetermined number of coefficient locations of as central portion of the corresponding tracking buffer;

calculating a right sum of absolute values of updated coefficients in the one of the in phase tracking buffer or the quadrature tracking buffer for a contiguous sequence of the predetermined number of coefficient locations of an output end of the corresponding tracking buffer;

if the left sum exceeds the center sum shifting coefficients within the in phase tracking buffer the quadrature tracking buffer an adjustment amount of tracking buffer locations toward the center of the corresponding tracking buffer;

if the right sum exceeds the center sum shifting coefficients within the in phase tracking buffer the quadrature tracking buffer an adjustment amount of tracking buffer locations toward the center of the corresponding tracking buffer; and

repeating the filtering, updating, calculating and shifting steps for a next instance of the digital signal.

The method may further comprise: adjusting the adjustment amount based upon a comparison of current left sum, center sum and right sum with a prior left sum, center sum and right sum.

Ways of carrying out the invention will now be described, by way of example only, with reference to the accompanying drawings wherein like reference numerals represent like parts, in which:

FIGURE 1 is a block diagram of a prior art Phase Lock Loop;

FIGURE 2 is a block diagram of a prior art digitally implemented Phase Lock Loop;

FIGURE 3 is a block diagram of one embodiment of a timing recovery device for a CAP/QAM receiver according to the invention;

FIGURE 4 is an example of a length-32 set of coefficient values in a filter buffer for a converged equalizer;

FIGURE 5 is an example of a length-32 set of coefficient values in a filter buffer reflecting timing drift for an equalizer after a period of time;

FIGURE 6 is diagram of a length-32 tap digital filter for a timing recovery device according to the invention; and

FIGURE 7a and 7b are diagrams of a length-32 tap digital filter for a timing recovery device illustrating the limits of a system using length-32 filter buffers within 128-element tracking buffers.

The embodiments of the invention now to be described involve a modified CAP/QAM device for receiving and processing a signal. Referring to the accompanying drawings, an embodiment of the receiver 300 according to the invention is illustrated in Figure 3. The receiver 300 can be implemented solely through hard-coded electronics or can utilize a computer and software for the digital signal processing.

In a receiver 300 according to the invention, an analog signal s(t) can be digitized by an analog to digital (A/D) converter 301. The A/D converter can be incorporated into the receiver or can be implemented separately.

The processing of the digitized signal begins with two phase splitting filters implemented as linear adaptive fractionally spaced equalizers. A linear adaptive equalizer is simply a Finite Impulse Response (FIR) Filter with programmable filter coefficients. A fractionally spaced equalizer processes more than 1 A/D sample per QAM/CAP symbol period.

A FIR filter implements the difference equation

$$y(n) = \sum_{k=0}^{N-1} w[k]x[n-k],$$

where x[n] are the input samples, y(n) is the filtered output, and w[k] are the coefficients (also known as tap weights). In the QAM/CAP receiver, the equalizers comprise an in-phase equalizer 302 and a quadrature equalizer 303, which are implemented as

$$\text{I }(n) = y(n) = \sum_{k=0}^{N-1} w[k]x[n-k]$$

and

$$\text{Q }(n) = y(n) = \sum_{k=0}^{N-1} w_Q[k]x[n-k],$$

where x[n] are the input samples from the A/D converter 301 and $w_I[k]$ are the coefficients of the in-phase equalizer 302 and $w_Q[k]$ are the coefficients of the quadrature equalizer 303, and I(n) and Q(n) are the outputs of the in-phase equalizer 302, and quadrature equalizer 303, respectively. The coefficients for the two filters, which can be stored in a buffer management device 304 or in a separate memory device or buffers, define the impulse response of the equalizers. There is one set of coefficients for the in-phase equalizer and one set of coefficients for the quadrature equalizer. The length of the equalizer filters (N in the above equations) can be set according to system parameters such as the particular characteristics of the channel being equalized.

During the start up state of the receiver, the two equalizers are trained using a standard Least Means Square (LMS) algorithm using a known training sequence. Training an equalizer refers to the changing of the coefficients over some time period such that a criterion is satisfied. In this case, the minimization of the mean square error is the criterion. The LMS algorithm iteratively updates the filter coefficients using the following equations:

$$e(n) = d(n) - w^H(n)u(n),$$

and

$$w(n+1) = w(n) + :u(n)e^*(n),$$

where e*(n) is the complex conjugate of the estimation error, w(n) is the tap weight vector (i.e. the set of coefficients), w(n+1) is the updated coefficient set after one iteration, d(n) is the desired result, and $w^H(n)u(n)$ is the output of the equalizer filter, and : is the update step size (0 < : <1). The superscript H denotes the Hermitian transposition (i.e. the operation of vector transposition with complex conjugation). Each equalizer has its own set of coefficients which can be stored in separate buffers and which are updated separately.

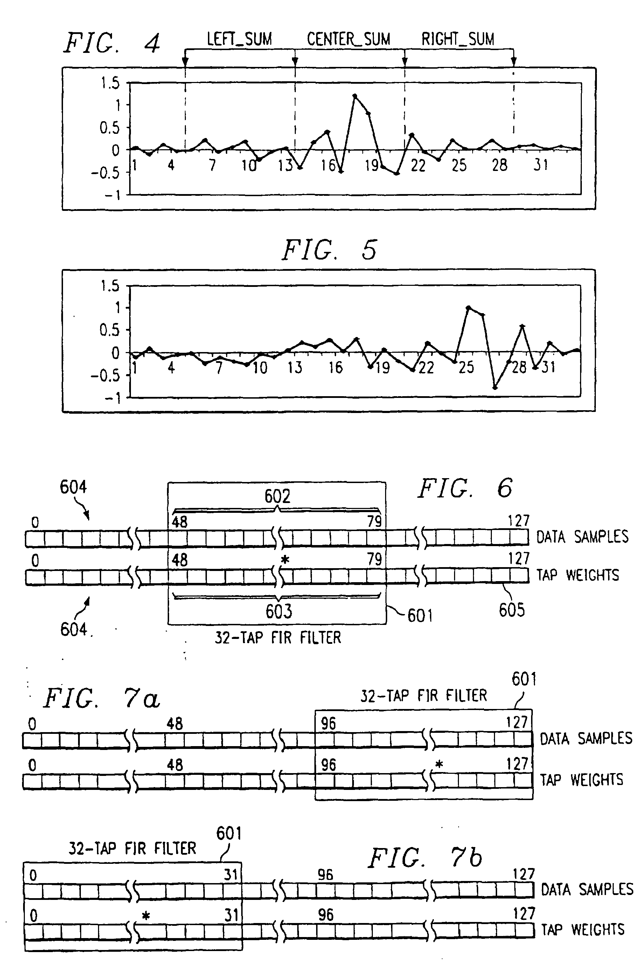

The desired results d(n) are points of a QAM constellation. For a simple 4-QAM constellation, the two dimensional coordinates, (x,y), are (1,1), (-1,1), (-1, -1), and (1, -1). The desired results are then a sequence of 1's and -1's. During training, d(n) can be a sequence that is known to both the transmitter and receiver. In the QAM/CAP receiver being described, the two equalizers are trained and updated independently. The in-phase equalizer uses the x coordinate values as the desired results while the quadrature equalizer uses the y coordinate values as desired results. In the above equations, u(n) for the in-phase equalizer is represented as I(n), and u(n) for the quadrature equalizer is represented as Q(n). After a number of iterations, the estimation error should converge to some minimum value and the coefficients for the equalizers should converge to steady state values. An example of a converged equalizer with a set of 32 coefficients is shown in Figure 4.

For updating the coefficients after training, the desired results d(n) are obtained from the outputs of the slicer 305. The slicer 305 selects the closest constellation point to the equalizer outputs.

Thus, in the 4-QAM example, if I(n) (the output of the in-phase equalizer) is 0.75, then the closest x coordinate, the sliced value, is 1 (0.75 is closest to 1 rather than -1). Therefore, the sliced value, I'(n)= 1, is the d(n) to be used in the error equation. The error e(n) would then be

$$
\begin{aligned}
e(n) &= d(n) - w^H(n)u(n) \\
&= I'(n) - I(n) \\
&= 1 - 0.75 \\
&= 0.25
\end{aligned}
$$

where I'(n) is the value of the slicer output and I(n) is the equalizer output.

In conventional QAM/CAP receivers, the adaptive equalizer is used to compensate for changes in channel characteristics. A previously stated, timing recovery is performed by a separate timing recovery block. However, because a fractionally space equalizer has the ability to incorporate a fractional delay into its impulse response, the adaptive fractionally space equalizer can be used as the timing recovery block as well as the channel compensation block.

Assuming that the transmission channel has no time varying aspect to it, the transmitter and receiver clocks can drift apart, thereby creating a timing drift. To correct for timing drift, the adaptive equalizers can be continually updated using the LMS algorithm. The coefficients of the equalizers will change such that the mean square error e(n) is continuously minimized. This LMS algorithm tracks the timing drift.

After some time, the equalizer coefficients may look like those in Figure 5. The highest valued coefficients have drifted to one side of the filter. In the prior art, the coefficients with the most energy could drift out of a buffer storing the coefficients, causing the receiver to fail.

To overcome this problem, there is here provided a buffer management device 301 having an equalizer filter 601 designed to monitor the movement of the coefficients within a tracking buffer 604. An example of a length-32 tap digital filter according to the invention is illustrated in Figure 6. At time t(0), the data filter buffer 602 and the coefficient filter buffer 603, each of length 32, are used to compute the filter output. The data filter buffer 602 and the coefficient filter buffer 603 can be centered inside the much longer buffers, such as the tracking buffers 604. Alternatively, the coefficient filter buffer 603 and the data filter buffer 602 can be separate buffers which point to the locations of the set of coefficients, represented by 603, and the set of data, represented by 602, which are to be used in the equalizer filter. In the example, the tracking buffers are of length 128. The coefficients 605 outside the 32 centered coefficients 605 are initialized to zero. As described above, the filter output of either the filters of the in-phase equalizer 302 or quadrature equalizer 303 can be represented as

$$
y(n) = \sum_{k=0}^{N-1} w[k]x[n-k].
$$

For a length-32 filter with an overall buffer length of 128, as provided in the example, the output at t(0) can be represented as:

$$y[n+i] = \sum_{k=i}^{i+N-1} x(n+i)w[n+i-k],$$

where initially i = 48, (i.e. the first element of the length-32 filter buffers centered within the tracking buffers).

A buffer management device 304, which can be implemented as hard coded electronics or can utilize a computer and software, determines the direction of the movement of the coefficients 605 by comparing sets of filter coefficients 605 to determine which sets hold the greatest values. In this way the buffer management device 304 can track the direction of timing drift. Accordingly, the buffer management device 304 allows for centering of the coefficients 605 by adjusting the relative positions of the coefficients 605 within the their respective buffers. While the methods described below for comparing and centering coefficients are directed to one set of coefficients, either the I or Q coefficients can be calculated or both.

In an initial state, the coefficients 605 in the center of the coefficient filter buffer 603 normally hold the greatest values. By comparing the values of the center coefficients 605 to the coefficient values to the left of center as well as comparing the center coefficient values with the coefficient values to the right of center, the buffer management device 301 can determine which way the coefficients 605 are moving.

One scheme for tracking coefficients 605 is by comparing the sum of the absolute values of a contiguous set of highest valued coefficients 605. At least three sums can be computed based on a set of coefficients 605 about the center of the entire set of coefficients 605, a set to the left of center and a set to the right of center. Choosing the length and the relative positions of the sets used for the summations depends upon the initial characteristics of the filter, but preferably encompass most of the highest valued coefficients 605. By choosing longer sets or more than three sets, the more operations which would be required to compute the summations. Whereas by choosing shorter or fewer sets, the greater is the chance of an error in estimating drift direction. For example, the total summation of all coefficient sets can be 80% of the total summation of all coefficients in a tracking buffer.

The sets of coefficients chosen for summation can be contiguous or overlapping. For example in Figure 4, three contiguous sets of a length-8 coefficient set encompass most of the highest valued coefficients. The following summations can represent the sums of the absolute values of the three overlapping sets of eight coefficients:

$$left\_sum = \sum_{k=i+N/2-12}^{i+N/2-4} abs(w[k]),$$

$$center\_sum = \sum_{k=i+N/2-4}^{i+N/2+4} abs(w[k]),$$

and

$$right\_sum = \sum_{k=i+N/2+4}^{i+N/2+12} abs(w[k]).$$

Once the sums of coefficients are computed, it is possible to center the sums by comparing the sums and shifting the sums accordingly.

One variation of a buffer management device according to the invention compares the summation result of the left set with the summation result of the center set. If the summation of the left set is greater, then the device shifts the filter buffers storing the coefficient sets to the left within the tracking buffers. If the summation result of the left set is not greater, the device compares the summation result of the center set with the summation result of the right set. If the summation of the right set is greater than the summation of the center set, then the device shifts the filter buffers to the right within the tracking buffers. If the summation of the right set is not greater, then the position of the filter buffers within the tracking buffers is not changed. While the above method describes comparing one set of coefficients, both sets of in-phase and quadrature filter coefficients can be centered together. Alternatively, both sets can be compared separately, and the amount of centering can be the average of the centering result performed on both sets of coefficients.

To center the coefficient set, the buffer management device 304 can shift the filter buffers storing the coefficients for the in-phase and quadrature equalizers by an amount, adj, sufficient to move the high valued coefficients so that they are substantially centered within the filter buffer. The amount of adjustment required depends upon the variability of drift in the system and can be adjusted accordingly. One way of automatically adjusting this amount, adj, is by using a feedback loop which compares the current coefficient summation sets with a prior set and adjusting the amount of shift, adj, accordingly. The amount of adjustment can be the distance from the center of the center sum to the closest edge of an adjacent set. In the current example, adj = 4.

The comparison performed by the buffer management device can be represented by the following algorithm:
If left_sum > center_sum, then i= i - adj
else if right_sum > center_sum, then i= i + adj,
else do not change i.

Thus if i has been changed, the filter is operating on 32 different data and coefficient buffer elements. As a consequence, the above device allows a receiver to track any timing drift where the filter buffers have not drifted past the edges of the tracking buffers. Figures 7a and 7b illustrate the limits of the example the system using length-32 filter buffers within 128-element tracking buffers. The time it takes for the coefficients to drift to the edge of the tracking buffers depends on the difference in the transmitter and receiver clock frequencies. The length of the tracking buffers should be chosen such that the coefficients will not reach the edges within the time frame of the transmission burst. If the tracking buffers were of infinite length, the receiver can hypothetically track the timing difference of an infinite length transmission.

The present invention is especially suited for CAP/QAM modems that use burst messages. The length of the buffer can be made as large as required to take into account an anticipated worst case burst length as well as the expected instability in the transmitter and receiver clocks.

Although the invention has been described here by reference to specific embodiments thereof, such embodiments are susceptible of variation and modification without departing from the scope of the provided claims.

**Claims**

1. A method for timing recovery in a communications system including
   receiving an analog input signal (S(t)),
   converting the analog input signal into a digital signal (301),
   splitting the digital signal (x(n)) into an in-phase signal and a quadrature signal,
   filtering the in-phase signal through an in-phase equalizer (302) with a plurality of in-phase coefficients,
   filtering the quadrature signal through a quadrature equalizer (303) with a plurality of quadrature coefficients,
   decoding transmitted symbols based upon the filtered in-phase signal (I(n)) and the filtered quadrature signal (Q(n)),
   updating the plurality of in-phase coefficients in a in-phase tracking buffer (304) and the plurality of quadrature coefficients in a quadrature tracking buffer (304) by continuously minimizing a mean square error in the decoded transmitted symbols,
   **characterized**
   **in that:**

   said step of filtering the in-phase signal through an in-phase equalizer includes filtering a selected plurality of in-phase coefficients corresponding to the contents of a contiguous sequence of coefficient locations within the in-phase tracking buffer (304) that has a larger number of coefficient locations than the number of coefficients in the selected plurality of in-phase coefficients;
   said step of filtering the quadrature signal through a quadrature equalizer includes filtering a selected plurality of quadrature coefficients corresponding to the contents of a contiguous sequence of coefficient locations within the quadrature tracking buffer (304) that has a larger number of coefficient locations than the number of coefficients in the selected plurality of quadrature coefficients;
   calculating a left sum of absolute values of updated coefficients in a one of the in-phase tracking buffer or the quadrature tracking buffer (304) for a contiguous sequence of a predetermined number of coefficient locations of an input end portion of the corresponding tracking buffer (304);
   calculating a center sum of absolute values of updated coefficients in the one of the in-phase tracking buffer or the quadrature tracking buffer (304) for a contiguous sequence of the predetermined number of coefficient locations of a central portion of the corresponding tracking buffer (304);
   calculating a right sum of absolute values of updated coefficients in the one of the in-phase tracking buffer or the quadrature tracking buffer (304) for a contiguous sequence of the predetermined number of coefficient locations of an output end portion of the corresponding tracking buffer;

if the left sum exceeds the center sum, shifting coefficients within the one of the in phase tracking buffer or the quadrature tracking buffer (304) by an adjustment amount of tracking buffer locations from the left toward the center of the corresponding tracking buffer (304);

if the right sum exceeds the center sum, shifting coefficients within the one of the in-phase tracking buffer or the quadrature tracking buffer (304) by an adjustment amount of tracking buffer locations from the right toward the center of the A corresponding tracking buffer (304); and

repeating the filtering, updating, calculating and shifting steps for a next instance of the digital signal.

**2.** The method of claim 1, further comprising:

adjusting the adjustment amount based upon a comparison of current left sum, center sum and right sum with a prior left sum, prior center sum and prior right sum.

**Patentansprüche**

**1.** Verfahren zur Taktrückgewinnung in einem Kommunikationssystem, das umfasst:

Empfangen eines analogen Eingangssignals (S(t)),
Umsetzen des analogen Eingangssignals in ein digitales Signal (301),
Aufteilen des digitalen Signals (x(n)) in ein Gleichphasensignal und ein Quadratursignal,
Filtern des Gleichphasensignals durch einen Gleichphasenentzerrer (302) mit mehreren Gleichphasenkoeffizienten,
Filtern des Quadratursignals durch einen Quadraturentzerrer (303) mit mehreren Quadraturkoeffizienten,
Decodieren gesendeter Symbole anhand des gefilterten Gleichphasensignals (I(n)) und des gefilterten Quadratursignals (Q(n)),
Aktualisieren der mehreren Gleichphasenkoeffizienten in einem Gleichphasen-Verfolgungspuffer (304) und der mehreren Quadraturkoeffizienten in einem Quadratur-Verfolgungspuffer (304) durch kontinuierliches Minimieren des mittleren quadratischen Fehlers in den decodierten gesendeten Symbolen,

**dadurch gekennzeichnet, dass:**

der Schritt des Filterns des Gleichphasensignals durch einen Gleichphasenentzerrer das Filtern einer ausgewählten Mehrzahl von Gleichphasenkoeffizienten umfasst, die den Inhalten einer zusammenhängenden Folge von Koeffizientenstellen in dem Gleichphasen-Verfolgungspuffer (304) entsprechen, der eine größere Anzahl von Koeffizientenstellen als die Anzahl der Koeffizienten in der ausgewählten Mehrzahl von Gleichphasenkoeffizienten besitzt;

der Schritt des Filterns des Quadratursignals durch einen Quadraturentzerrer das Filtern einer ausgewählten Mehrzahl von Quadraturkoeffizienten umfasst, die den Inhalten einer zusammenhängenden Folge von Koeffizientenstellen in dem Quadratur-Verfolgungspuffer (304) entsprechen, der eine größere Anzahl von Koeffizientenstellen als die Anzahl von Koeffizienten in der ausgewählten Mehrzahl von Quadraturkoeffizienten besitzt;

Berechnen einer linken Summe von Absolutwerten aktualisierter Koeffizienten entweder in dem Gleichphasen-Verfolgungspuffer oder in dem Quadratur-Verfolgungspuffer (304) für eine zusammenhängende Folge einer vorgegebenen Anzahl von Koeffizientenstellen eines Eingangsendabschnitts des entsprechenden Verfolgungspuffers (304);

Berechnen einer mittleren Summe von Absolutwerten aktualisierter Koeffizienten in dem einen des Gleichphasen-Verfolgungspuffers und des Quadratur-Verfolgungspuffers (304) für eine zusammenhängende Folge der vorgegebenen Anzahl von Koeffizientenstellen eines mittleren Abschnitts des entsprechenden Verfolgungspuffers (304);

Berechnen einer rechten Summe von Absolutwerten aktualisierter Koeffizienten in dem einen des Gleichphasen-Verfolgungspuffers und des Quadratur-Verfolgungspuffers (304) für eine zusammenhängende Folge der vorgegebenen Anzahl von Koeffizientenstellen eines Ausgangsendabschnitts des entsprechenden Verfolgungspuffers;

falls die linke Summe die mittlere Summe übersteigt, Verschieben von Koeffizienten in dem einen des Gleichphasen-Verfolgungspuffers und des Quadratur-Verfolgungspuffers (304) um einen Einstellbetrag von Verfolgungspufferstellen von links zur Mitte des entsprechenden Verfolgungspuffers (304);

falls die rechte Summe die mittlere Summe übersteigt, Verschieben von Koeffizienten in dem einen des Gleichphasen-Verfolgungspuffers und des Quadratur-Verfolgungspuffers (304) um einen Einstellbetrag von Verfolgungspufferstellen von rechts zur Mitte des entsprechenden Verfolgungspuffers (304); und

Wiederholen der Filterungs-, Aktualisierungs-, Berechnungs- und Verschiebungsschritte für eine nächste Instanz des digitalen Signals.

**2.** Verfahren nach Anspruch 1, das ferner umfasst:

Einstellen des Einstellbetrags anhand eines Vergleichs einer momentanen linken Summe, einer momentanen mittleren Summe und einer momentanen rechten Summe mit einer früheren linken Summe, einer früheren mittleren Summe bzw. einer früheren rechten Summe.

**Revendications**

**1.** Procédé de récupération d'horloge dans un système de communications comprenant les étapes consistant à :

recevoir un signal d'entrée analogique (S(t)),
convertir le signal d'entrée analogique en un signal numérique (301),
séparer le signal numérique (x(n)) en un signal en phase et en un signal en quadrature,
filtrer le signal en phase à l'aide d'un égaliseur en phase (302) avec une pluralité de coefficients en phase,
filtrer le signal en quadrature à l'aide d'un égaliseur en quadrature (303) avec une pluralité de coefficients en quadrature,
décoder les symboles transmis sur la base du signal en phase filtré (I(n)) et du signal en quadrature filtré (Q(n)),
mettre à jour la pluralité de coefficients en phase dans un tampon de suivi en phase (304) et la pluralité de coefficients en quadrature dans un tampon de suivi en quadrature (304) en minimisant sans cesse une erreur quadratique moyenne dans les symboles transmis décodés,

**caractérisé en ce que** :

ladite étape de filtrage du signal en phase à l'aide d'un égaliseur en phase inclut l'étape consistant à filtrer une pluralité sélectionnée de coefficients en phase correspondant au contenu d'une séquence contiguë d'emplacements de coefficients à l'intérieur du tampon de suivi en phase (304) qui présente un nombre d'emplacements de coefficients plus grand que le nombre de coefficients dans la pluralité sélectionnée de coefficients en phase ;
ladite étape de filtrage du signal en quadrature à l'aide d'un égaliseur en quadrature inclut l'étape consistant à filtrer une pluralité sélectionnée de coefficients en quadrature correspondant au contenu d'une séquence contiguë d'emplacements de coefficients à l'intérieur du tampon de suivi en quadrature (304) qui présente un nombre d'emplacements de coefficients plus grand que le nombre de coefficients dans la pluralité sélectionnée de coefficients en quadrature ;
calculer une somme gauche des valeurs absolues des coefficients mis à jour dans l'un du tampon de suivi en phase ou du tampon de suivi en quadrature (304) pour une séquence contiguë d'un nombre prédéterminé d'emplacements de coefficients d'une partie d'extrémité d'entrée du tampon de suivi correspondant (304) ;
calculer une somme centrale des valeurs absolues des coefficients mis à jour dans le tampon de suivi en phase ou le tampon de suivi en quadrature (304) pour une séquence contiguë d'un nombre prédéterminé d'emplacements de coefficients d'une partie centrale du tampon de suivi correspondant (304) ;
calculer une somme droite des valeurs absolues des coefficients mis à jour dans le tampon de suivi en phase ou le tampon de suivi en quadrature (304) pour une séquence contiguë d'un nombre prédéterminé d'emplacements de coefficients d'une partie d'extrémité de sortie du tampon de suivi correspondant (304) ;
si la somme gauche est supérieure à la somme centrale, décaler les coefficients à l'intérieur du tampon de suivi en phase ou du tampon de suivi en quadrature (304) d'une quantité de réglage d'emplacements de tampon de suivi de la gauche vers le centre du tampon de suivi correspondant (304) ;
si la somme droite est supérieure à la somme centrale, décaler les coefficients à l'intérieur du tampon de suivi en phase ou du tampon de suivi en quadrature (304) d'une quantité de réglage d'emplacements de tampon de suivi de la droite vers le centre du tampon de suivi correspondant (304) ; et
répéter les étapes de filtrage, de mise à jour, de calcul et de décalage pour une prochaine instance du signal numérique.

**2.** Procédé selon la revendication 1, comprenant de plus l'étape consistant à :

régler la quantité de réglage sur la base d'une comparaison de la somme gauche actuelle, de la somme centrale actuelle et de la somme droite actuelle, avec une somme gauche antérieure, une somme centrale antérieure et une somme droite antérieure.

*FIG. 1*

*FIG. 2*

*FIG. 3*

*FIG. 4*

*FIG. 5*

*FIG. 6*

*FIG. 7a*

*FIG. 7b*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5859877 A, Betts
- US 5930309 A, Knutson
- US 4334313 A